Europäisches Patentamt

(19) European Patent Office

Office européen des brevets

(11) Publication number: **0 060 271**
**B1**

## (12) EUROPEAN PATENT SPECIFICATION

(45) Date of publication of patent specification: **13.05.87**

(51) Int. Cl.⁴: **B 23 P 11/02, F 16 B 39/02**

(21) Application number: **81902550.3**

(22) Date of filing: **09.09.81**

(86) International application number:
**PCT/US81/01199**

(87) International publication number:
**WO 82/00965 01.04.82 Gazette 82/09**

(54) **FREE SPINNING LAMINATED NUT WITH AUTOMATIC LOCK.**

(30) Priority: **16.09.80 US 187833**

(43) Date of publication of application:
**22.09.82 Bulletin 82/38**

(45) Publication of the grant of the patent:
**13.05.87 Bulletin 87/20**

(84) Designated Contracting States:
**DE FR GB**

(56) References cited:
**DE-A-2 829 385**
**FR-A- 675 066**
**GB-A-1 193 751**
**US-A- 712 905**
**US-A-1 293 755**
**US-A-1 755 807**
**US-A-1 813 640**
**US-A-2 581 641**
**US-A-3 233 262**

(73) Proprietor: **REYNOLDS, Richard Lee**
**6 Stratford Lane**
**Ho-Ho-Kus NJ 07423 (US)**

(72) Inventor: **REYNOLDS, Richard Lee**
**6 Stratford Lane**
**Ho-Ho-Kus NJ 07423 (US)**

(74) Representative: **Newens, Leonard Eric et al**
**F.J. CLEVELAND & CO. 40/43 Chancery Lane**
**London WC2A 1JQ (GB)**

Courier Press, Leamington Spa, England.

## Description

Technical Field

My invention relates to improvements in a lock nut more especially a free spinning laminated nut utilizing laminations of hexagonal shaped hardened coned-disc springs, formed as a helix or tapped to match the bolt threads with which the lock nut cooperates.

Such a nut is, for example, sold by Peterson-American Corporation under the trademark "Elephant" it has stacked aligned multiple threaded discs retained by a steel outer hexagonal shaped cage.

Such a nut is free running until seated. Locking load is applied by additional rotation after seating, which compresses and partially flattens the conical spring discs with resulting mechanical interference on the thread flanks due to the change in hole size as the conical disc flattens. This results in thread interference that resists unloading that might otherwise occur as a result of vibration. Thus, the independently loaded conical spring threaded segments when flattened create a thread interference that tends to lock the nut against rotation, or loosening, when it is subjected to vibration.

As compared to other free spinning lock nuts, this nut effects a dimensional change under loading. It has a conical spring action that enables it to be counter rotated over half a turn or so without loss of total load or loss of interference.

However, the prior art laminated nut, described above, requires for positive locking a secondary operation of adjustment to align holes for cotter key insertion, wiring, or requires mechanical nut deformation into a slot or recess. Further, in the prior art, the loading on the threads of the nut segments is non-uniform, to the extent such that the stress is concentrated in the first thread adjacent the bearing surface. At that position the stress may be as much as a factor of two or more higher than the average stress in the remaining threads.

British Patent Specification No. 1,193,751 describes a self-locking nut comprising a polygonal housing or cage open at least at one end for passage of a screw thereinto and containing at least one conical segment disposed between end plates having an external contour to engage with the housing which are flat on the side while being contoured on the other to fit the abutting surface of a resilient plate. Similarly in West German Patent No. DT 2829-385 a self-locking nut is provided including a cage with a retaining component and an annular thread-forming assembly. Inside the cage there are at least two ring-shaped components of equal size each of which is provided with a threaded section. The outer, lower and upper surfaces of the thread of each ring-shaped component, crossways to the axis, has flat continuous top surfaces, so that the strength of each component is instant.

U.S. Patent No. 1,813,640 describes a nut lock internally toothed with a ratchet profile in combination with a longitudinally grooved bolt shank wherein the nut lock comprises a nut with an interrupted annular surface, a ring within the nut having a tongue extending into the grooves in the bolt shank and a toothed portion for engagement with the annular surface, a tongue extending endwise from the ring in an external direction and a plate thereof, and tension means to induce the ring to effect the engagement referred to, the tongue serving as a handle to effect the disengagement of the ring.

To eliminate the positive locking problems presented by prior laminated nuts, that is, the necessity for a secondary operation of adjustment to align holes for cotter key insertion, wiring, or mechanical nut deformation into a slot or recess, the present invention provides an automatically locking laminated nut comprising a plurality of stacked, conical spring washer segments and a cage for holding the spring washer segments in stacked, aligned relation so that they act, in effect, as if they were a single threaded unit characterized by the cage containing a locking plate therewithin having a ratcheting connection so that the cage can rotate relative to the locking plate, the locking plate comprising at least one upstanding lug on said locking plate for engaging in use with the least one slot in a bolt.

The cage is further characterized by a hexagonal spring steel enclosure having a bottom flange shaped to provide a loaded face and a top flange shaped to retain in the cage the locking plate. The locking plate is further characterized by a ratcheting connection having at least one projection extending radially outwardly therefrom for engaging at least one of a series of circumferentially spaced slots in the side wall of the cage and a plurality of spring steel fingers extending upwardly from the locking plate and beyond the top flange, the fingers being circumferentially-spaced around the axis of the cage and being of such width and diametrical spacing as to engage in slots formed in the side of the bolt and thus lock the plate against rotation with respect to the bolt.

The cage is even further characterized by having at least one portion of its side wall made flexible so that the projection can be disengaged from the slot in the side wall of the cage by rotation of the cage relative to the locking plate. The ratcheting connection with the side wall of the cage allows rotation of the cage and segments in the direction of rotation relative to the bolt but prevents rotation of the cage and segments in the other direction relative to the bolt. The cage has additional slots in the side walls thereof which allow the side walls between the slots to flex about the lower corners formed by the junction of the side walls with the lower flange and the locking plate.

The invention will now be described by way of example only with particular reference to the accompanying drawings wherein:

Figure 1 of the drawings is a side view, partly in section, of a spindle for a front drive automobile in which the tapered roller bearings are pre-loaded to a selected value by a laminated nut of the present invention.

Figure 2 is a plan view to an enlarged scale of the nut of Figure 1.

Figure 3 is a sectional view taken on the section station 3—3 of Figure 2. In Figure 3 it will be noticed that, for convenience, the outer edges of the washers are shown to be cylindrical. In actuality each of these surfaces would be slightly frusto conical.

Figure 4 is a side view of the nut of Figure 2.

Figure 5 is a plan view of the ratchet plate of the nut locking mechanism;

Figures 6 and 7 are partial views showing the operation of the ratchet lock mechanism.

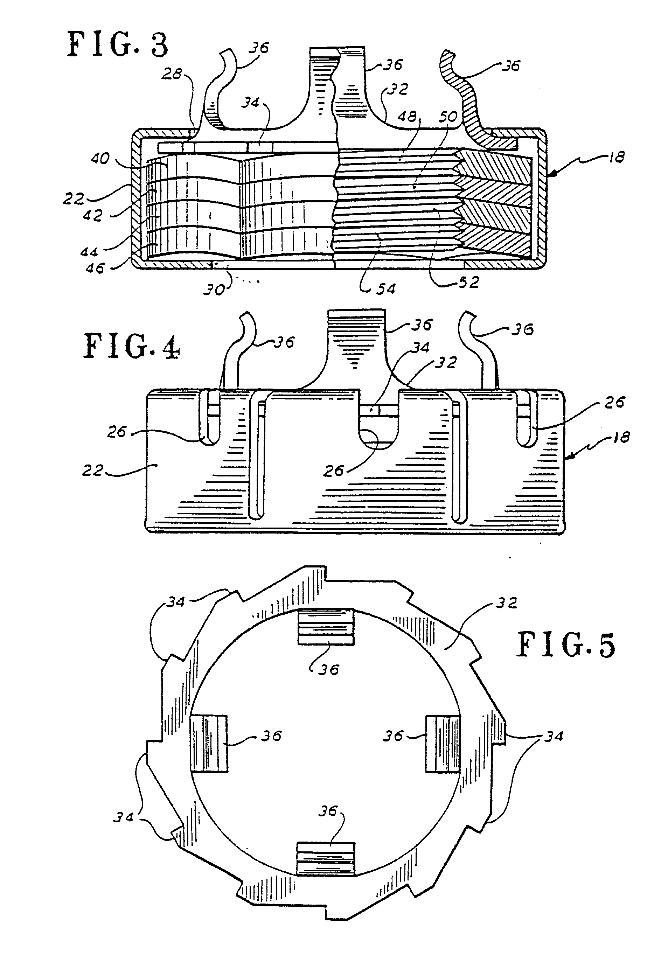

In Figure 3 it will be noticed that, for convenience, the outer edges of the washers are shown to be cylindrical. In actuality each of these surfaces would be slightly frusto conical.

Figure 8 is a graph on Cartesian co-ordinates comparing the effort of relaxation or dimensional changes on a solid nut with the effect of such changes on an Elephant nut. The nut size illustrated is M20 × 1.5. The graph has elongation-compression as abscissa and load in pounds as ordinate.

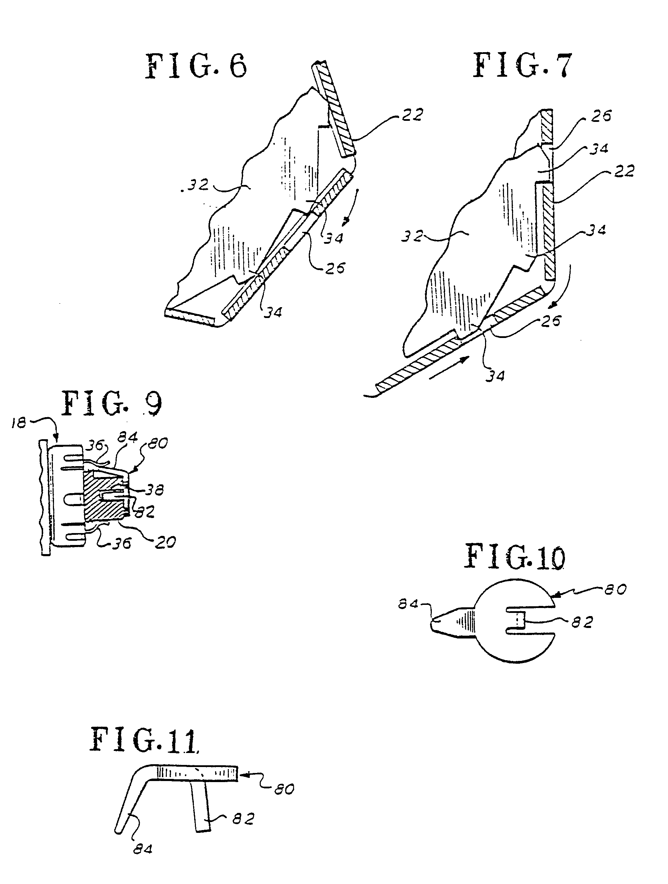

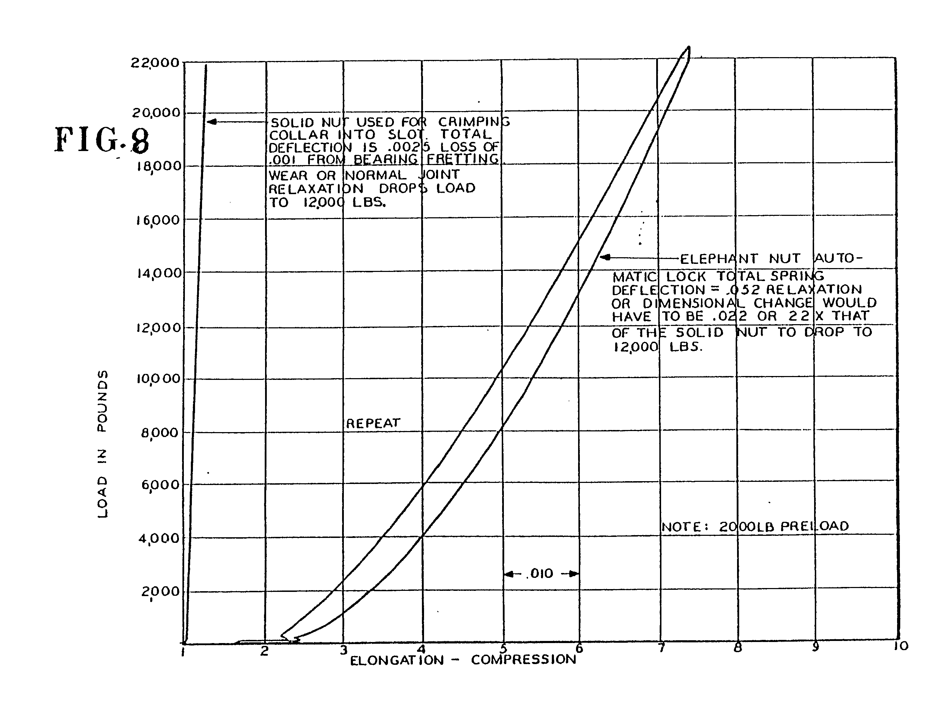

Figures 9, 10, 11, show a tool or fixture for disengagement of the nut lock for removal of the nut.

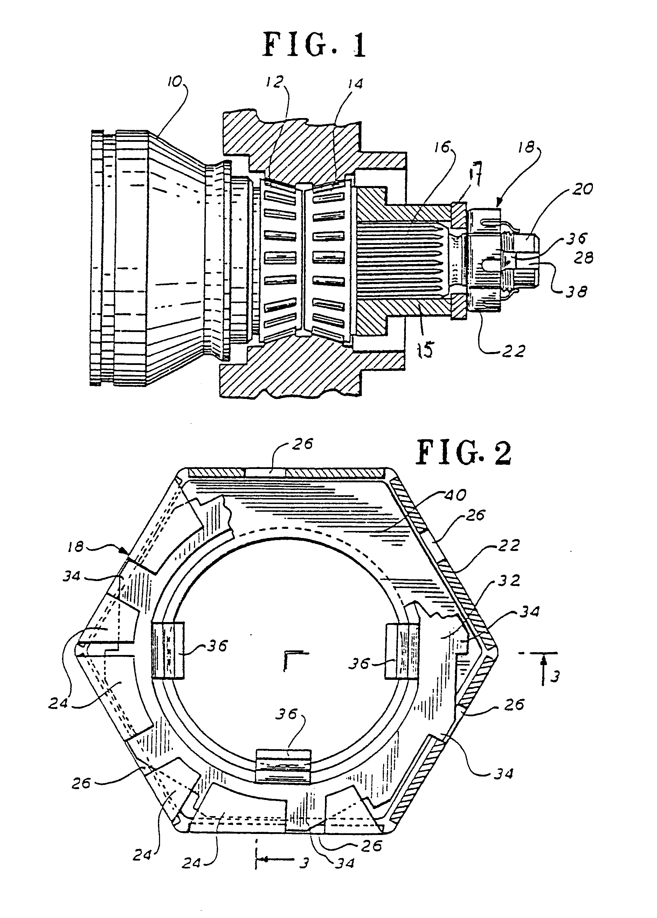

A particular important application of the present invention is for spindles for front wheel drive automobiles. Figure 1 shows such a spindle 10, including tapered roller bearings 12, 14 which must, for proper operation, be pre-loaded to a selected value and then maintained pre-loaded at that value for long periods of operation, including operation while subject to vibration and shock.

A nut of the invention for pre-loading said bearings and maintaining the pre-load during operations of the automobile, is shown at 18.

After assembly of the spindle components, nut 18 is run freely, either by hand or by tool, on the threaded end portion of a spindle bolt 20 until it seats against a washer which transmits the force to a collar or wheel hub 15 splined to the spindle at 16. The collar in turn transmits the pre-loading force to the tapered roller bearings 12, 14. Such force may be, for example, about 5000 pound-force per sq. inch (34,474.0 kilonewtons per sq. metre or 3.44 hectobars).

After the nut seats down, it is tightened by a wrench until the force it applies to the bearing is increased to the selected pre-loading value. The spindle is placed in tension, and the tapered roller bearings are pre-loaded in compression. Tightening of nut 18 creates this tension and compression, to a degree determined by the nut tightening torque. The total clamp load generated by a nut is about 17,000 to 22,000 pounds force (75619 to 97860 newtons).

The "turndown" of nut 18 will seat the bottom face of the nut flatly against the flat top of washer 17 on which it bears. It also, after it seats, will partially flatten frusto conical spring washer segments 40, 42, 44, 46 (Fig. 3) and thereby create a spring force which gradually increases as the said segments become more and more flattened. The arrangement is such that when the nut 18 is fully tightened the frusto conical spring washer segments are still not completely flat, but still have some bow. A typical bolt load design will flatten the conical spring washers segments by sixty to seventy per cent. They are not entirely flattened.

As the nut 18 is tightened, ratchet lock 32, as shown in Figures 2, 3, 4, 5, 6 and 7, will ratchet, with lugs 34 being freed from the locking slots 26 in cage 22 as it is rotated clockwise. The ratchet lock is of plate form and has four fingers 36 integral therewith, composed of spring steel just as is the case with the conical spring segments. These four fingers act to centre the nut 18 on the spindle and, in addition, one of them drops into and engages a slot 38 in the side of the spindle bolt 20 and thus locks the ratchet lock 32 to the spindle bolt 20 against relative rotation, just as soon as the nut 18 is rotated on the bolt by as little as one quarter of a turn. When this happens, the ratchet lock 32 in effect becomes locked to the spindle 20. However, the nut 18 itself can still be rotated (tightened/or loosened depending on the direction of rotation), by the ratcheting action shown in Figures 6 and 7 as explained above, simply by turning cage 22 with a socket wrench which in turn rotates the frusto conical spring waster segments 40, 42, 44 and 46 in somewhat the same manner (until they are seated) as a solid nut is run down on a bolt.

The nut 18 can thus be tightened, to the position in which it exerts the selected preload force on taper bearings 12, 14 and then it will be automatically locked by one of the lugs 36 being engaged in slot 38 in the side of the bolt 18. No backward rotation is necessary to form that lock, at exactly the desired pre-load ratchet lock 32 and lugs 34 thereon enable the nut 18 to be tightened to exactly the desired pre-load and then hold the nut 18 in that position.

In the ratcheting operation, during run down of the nut 18, there must of course be some provision made to allow lugs 34 to disengage from the slots 26 in cage 22. This is provided by forming slots in the sidewall of cage 22 at each corner of the hexagonal cage. Such slots allow each side wall to flex between the slots, and about the lower corner as a hinge, thus allowing the cage 22 to free itself from lugs 34 as the cage 22 is rotated clockwise relative to the spindle bolt 20 and ratchet lock 32.

Thus there is formed a new automatic and positive lock which requires only tightening of the nut 18 with the usual wrench. Once in place and locked in the desired position, it simply will not come loose, regardless of vibrations, and it fully meets presently known product liability requirements.

The use of this lock is of course not limited to laminated nuts. It may also be used with solid nuts. It has particular utility however for lock nuts for spindles for front drive automobiles where a high degree of precision and at the same time positive safety is required.

As previously stated, all parts of the lock nut of this invention can be made of spring steel or other spring material and ratcheting action in the embodiment shown is provided by flexing of the side walls of the nut. However, the flexing need only be very slight and it is found in practice that the usual socket wrench tolerances are sufficient to allow the socket head to fit over the nut, and to rotate the nut, with ratcheting action and consequent side wall flexing without bending. In fact, the flexing wall action tends to hold the socket on the nut until it is tightened to the point where the ratchet locks in final position and the socket is to be removed.

In the embodiment shown, twelve lugs 34, and six slots 26 are provided.

The load bearing components of nut 18, as shown in Figures 2 through 7, consist of four frusto conical spring washer segments 40, 42, 44 and 46 which are stacked and aligned to form in effect a laminated nut.

It should be noted that the combination shown of the ratchet with self seeking fingers provides an entirely new result, of substantial commercial advantage. The job not only can be done better, but also cheaper.

The angle used for each frusto-conical shaped spring washer segment can be calculated from a formula disclosed in SCHNORR'S *Handbook for Disc Springs*. (SCHNORR Handbook is published by Adolf Schnorr GmbH & Co. KG D 7032 Sindelfingen 6, Federal Republic of Germany. The 1979 edition is the 11th Edition). As previously stated, the spring discs are not calculated completely to flatten under the designed load; the flex, both up and down as the bolt elongates, contracts, or vibrates.

The graph of Figure 8 compares the results obtained from a solid nut shown at the left of the Figure and so marked, with the results obtained from a spring disc laminated nut with cone spring washer segments. As will be seen, the bearing pre-loads are maintained over wide ranges of deflection for the spring disc laminated nuts (the two right hand curves) as compared with the curve for the solid nut.

The formulas relating to loads necessary to flatten frusto conical spring discs shown that, other things being held constant, the load to flatten will increase with disc thickness. This principle is utilized in Figure 8 to provide a nut of great load carrying ability because of more uniform thread loading, or increased fatigue life, and of greater self blocking characteristics.

Referring to Figures 9, 10 and 11 pin 82 fits in the centering recess of spindle bolt 20 and the arm 84 extends therefrom over the edge of the bolt and under lug 36. Thus lug 36 is lifted out of slot 38, allowing it to be turned, and removed, by a socket wrench which fits over outer cage 22.

Previous designs of the Elephant type nut, prior to the present invention, used conical spring segments but did not relate to non-uniform nut loading of the segments to functional deflection characteristics. The possible concentration of loading, in a nut-bolt thread fastening, nearly two thirds of all tension loading occurs at the first thread engaged. This uneven loading of previous multiple element nuts caused accelerated deflection of the first element. The result of this accelerated deflected element caused high stress of the male threads of the bolt with possible thread shear results. Nuts previously made in this manner and commercially marketed would not meet SAE and IFI industrial requirements for strength. It is accepted practice that nut strength shear requirements must exceed bolt tensile strength so that the mode of failure is bolt breakage.

The present invention combines the established formulae used for predicting conical washer behaviour (see SCHNORR'S *Handbook for Disc Springs*) with proven load distribution characteristics in nut-bolt joint applications. This combination used in association with other nut bolt tolerance standards allows for design of spring washer segments with predictable behaviour related to bolt loading. The nut design as proposed is based upon near uniform washer segment deflection and loading bottom to top.

With respect to the mechanically positive automatic lock mechanism of the invention, the lock mechanism automatically engages in a slot or grooves in the associated bolt, stud or shaft, which can be driven by hand or power tools to desired torque or clamp load requirements, and is positively locked from counter rotation. The combination of an automatic self seeking secondary lock mechanism and nut with predictable load-deflection characteristics that contributes spring loading, allows fastener loading of precise joint pre-load with the torque and clamp load tolerances of industry used power tools. This combination is particularly adaptable to loading bearings that require defined pre-load. Further, the design of this invention does not require any secondary adjustment for precise loading.

Further advantages of the present invention are firstly, the establishment of design criteria that will produce uniform deflection of the nut related to nut-bolt joint loading that will provide predictable load-deflection and resultant interference for blocking. This combination will provide nut strength relationships commensurate with established industry standards. The uniform loading of the nut top to bottom is accomplished by varying the washer segment thickness related to loading. The bottom washer with the greatest load would be the heavy member with subsequent washers reduced in thickness. This means that washer segment thickness can be a thickness that is greater than the pitch, more than a single pitch or less than a pitch; secondly, the provision of a parallel load surface for critical loading of joints that contain bearings. Heretofore, the nut required grinding or special surface finishes related to perpendicularity of the axis of the thread to provide uniform interface loading. The resilient action of this invention allows the interface surface to self seek for uniform loading; and thirdly, the provision of an inexpensive tool for the purpose of easily defeating the locking device to facilitate removal and reuse.

## Operating Example

To illustrate the application of the invention to a particular use, the following is an example of the automatic nut as manufactured for use as the spindle lock nut of a 1981 Escort and Lynx Ford front wheel drive car:

Ford engineering specified load ME-900.10 = 46,500 lb (21092 kg) Proof Load

Application — Front wheel spindle nut design load — 11—22,000 lb (approximately 4989 to 9979 kg)

Assembly Torque 180—220 lbf ft. (244—298 newton metres)

Nut to have six threads with design dimensional stack tolerance to accommodate five threads minimum.

## Nut Construction

Frusto conical spring washer elements, 0.078″ (1.98 mm) thick with crown of 0.05″ (1.27 mm), material 1065—1070 spring steel, ratchet locking mechanism and cage — also spring steel. Cage is 0.036″ (0.9144 mm)

Lock Mechanism is 0.04″ (1.016 mm) thick.

## Application Description

Spindle nut to be hand started, driven by Rockwell Tool at 125 RPM. Locking Mechanism to self seek locking slot and ratchet free to design clamp load.

The sample spindle nut described above does not incorporate varied thickness conical spring washer element. This application is utilizing less than half of the nut proof load capacity and is not susceptible to high shear loading.

In accordance with Rule 25(2) EPC attention is drawn to the EP—A—163832 and the EP—A—163833 specifications in which subject matter described in the present publication is claimed.

## Claims

1. A laminated nut (18) comprising a plurality of stacked conical spring washer segments (40, 42, 44 & 46) and a cage (22) for holding said spring washer segments in stacked, aligned relation so that they act, in effect, as if they were a single threaded unit characterized by the cage (22) containing a locking plate (32) therewithin having a ratcheting connection (34) so that the cage can rotate relative to said locking plate, the locking plate comprising at least one upstanding lug (36) on said locking plate (32) for engaging in use with at least one slot (38) in a bolt (20).

2. The laminated nut according to Claim 1 wherein said cage comprises a hexagonal spring steel enclosure (22) having a bottom flange (30) shaped to provide a load face and a top flange (28) shaped to retain in said cage said locking plate (32), said locking plate having at least one projection (34) extending radially outwardly therefrom for engaging at least one of a series of circumferentially spaced slots (26) in the side wall of said cage and a plurality of spring steel fingers (36) extending upwardly from said locking plate and beyond said top flange (28), said fingers being circumferentially-spaced around the axis of said cage and being of such width and diametrical spacing as to engage in slots (38) formed in the side of said bolt (20) and thus lock the said plate against rotation with respect to said bolt.

3. The laminated nut according to Claims 1 or 2, said cage (22) having at least a portion of its side wall made flexible so that said at least one projection (34) can be disengaged from said slot (26) in the side wall of the cage by rotation of the cage relative to the locking plate (32).

4. The laminated nut according to Claims 1, 2 and 3, said cage (22) further comprising a ratcheting connection (34) with the side wall of said cage for allowing rotation of said cage and segments (40, 42, 44, 46) in one direction of rotation relative to said bolt but preventing rotation of said cage and segments in the other direction relative to said bolt.

5. The laminated nut according to Claims 1, 2, 3 and 4, said cage (22) having additional slots in the side walls thereof which allow the side walls between the slots to flex about the lower corners formed by the junction of the side walls with the lower flange (30).

## Patentansprüche

1. Schraubenmutter (18) mit einer Mehrzahl von geschichteten, konischen Blattfeder-Scheiben (40, 42, 44, 46) und einem Käfig (22), in dem die Scheiben gestapelt und zueinander ausgerichtet derart gehalten werden, daß sie insgesamt wie eine einzige, mit Gewinde versehene Einheit wirken, dadurch gekennzeichnet, daß der Käfig (22) eine Befestigungsscheibe (32) enthält, die in einem Rasteingriff (34) derart steht, daß der Käfig relativ zur Befestigungsscheibe drehen kann, wobei die Befestigungsscheibe zumindest einen aufwärtsstehenden Vorsprung (36) aufweist, der bei Benutzung mit zumindest einem Schlitz (38) in einem Bolzen (20) in Eingriff steht.

2. Schraubenmutter nach Anspruch 1, dadurch gekennzeichnet, daß der genannte Käfig eine hexagonal geformte Hülle (22) aus Federstahl aufweist, die mit einem Boden-Flansch (30) versehen ist, der so geformt ist, daß er eine Anschlagfläche bildet, sowie einen oberen Flansch (28) der so geformt ist, daß er die Befestigungsscheibe (32) im Käfig hält, wobei die Befestigungsscheibe zumindest einen Vorsprung (34) aufweist, der sich radial auswärts erstreckt, um mit zumindest einem von mehreren Schlitzen (26) in Eingriff zu stehen, die am Umfang unter Abstand in der Seitenwand des Käfigs angeordnet sind, und mit einer Vielzahl von Fingern (36) aus Federstahl, die sich unterhalb des oberen Flansches (28) von der Befestigungsscheibe aufwärts erstrecken, wobei die Finger um die Achse des Käfigs in Umfangsrichtung unter Abstand angeordnet sind und solche Breiten bzw. diametralen Abmessungen haben, daß sie in Schlitze (38) eingreifen, die auf der Seite des Bolzens (20) ausgeformt sind, so daß die Scheibe an einer Drehung in Bezug auf den Bolzen gehindert ist.

3. Schraubenmutter nach einem der Ansprüche 1 oder 2, dadurch gekennzeichnet, daß zumindest ein Abschnitt der Seitenwand des Käfigs (22) elastisch gestaltet ist, so daß zumindest Vorsprung (34) aus dem Schlitz (26) in der Seitenwand des Käfigs durch Drehung des Käfigs relativ zur Befestigungsscheibe (32) entfernbar ist.

4. Schraubenmutter nach einem der Ansprüche 1, 2 oder 3, dadurch gekennzeichnet, daß der Käfig (22) weiterhin einen Rast-Eingriff (34) mit der Seitenwand des Käfigs aufweist, um eine Drehung des Käfigs und der Segmente (40, 42, 44, 46) in einer Drehrichtung relativ zum Bolzen zuzulassen, während eine Drehung des Käfigs und der Segmente in der anderen relativen Drehrichtung zum Bolzen verhindert ist.

5. Schraubenmutter nach einem der Ansprüche 1, 2, 3 oder 4, dadurch gekennzeichnet, daß der Käfig (22) zusätzliche Schlitze in seinen Seitenwänden aufweist, die es ermöglichen, daß die Seitenwände zwischen den Schlitzen um die unteren Kanten biegbar sind, die an der Verbindungsstelle der Seitenwände mit dem Boden-Flansch (30) gebildet sind.

**Revendications**

1. Un écrou laminé (18) comprenant un ensemble de segments de rondelles de ressorts coniques empilés (40, 42, 44 et 46) et une cage (22) pour maintenir lesdits segments de rondelles de ressorts empilés, alignés entre eux de façon à ce qu'ils agissent effectivement, comme s'il n'y avait qu'une seule unité filetée, caractérisé par la cage (22) contenant un verrou plat (32) à l'intérieur, ayant une connexion de cliquet (34) afin que la cage pouisse tourner par rapport à ladite plaque de verrouillage, la plaque de verrouillage comprenant, au moins, une languette orientée vers le haut (36) sur ladite plaque de verrouillage (32) pour s'engager, en service, avec au moins une fente (38) d'un boulon (20).

2. L'écrou laminé selon la revendication 1, dans lequel ladite cage comprend une enveloppe hexagonale en acier à ressort (22) ayant une bride inférieure (30) de forme telle qu'elle présente une face de charge et une bride supérieure (28) de forme telle qu'elle retienne ladite plaque de verrouillage (32) dans ladite cage, ladite plaque de verrouillage ayant, au moins, une projection (34) orientée radialement vers l'extérieur à partir de cette plaque pour s'engager dans une, au moins, d'une série de fentes espacées le long de la circonference (26) de la paroi latérale de ladite cage, et plusieurs doigts en acier à ressort (36) orientés vers le haut à partir de ladite plaque de verrouillage et au-delà de ladite bride supérieure (28), lesdits doigts étant espacés le long de la circonférence autour de l'axe de ladite cage et étant d'une largeur et d'un espacement diamétral tels qu'ils s'engagent dans des fentes (38) formées sur le côté dudit boulon (20), et bloquent ainsi ladite plaque en l'empêchant de tourner par rapport audit boulon.

3. L'écrou laminé selon les revendication 1 ou 2, ladite cage (22) ayant, au moins, une portion de sa paroi latérale rendue souple afin que ladite projection, au moins, (34) puisse être dégagée de ladite fente (26) de la paroi latérale de la cage par rotation de la cage, par rapport à la plaque de verrouillage (32).

4. L'écrou laminé selon les revendications 1, 2 et 3, ladite cage (22) comprenant, encore, une connexion à cliquet (34) avec la paroi latérale de ladite cage pour permettre la rotation de ladite cage, et des segments (40, 42, 44, 46) dans un seul sens de rotation par rapport audit boulon mais empêchant la rotation de ladite cage et desdits segments dans l'autre sens par rapport audit boulon.

5. L'écrou laminé selon les revendications 1, 2, 3 et 4, ladite cage (22) ayant des fentes supplémentaires dans ses parois latérales qui permettent aux parois latérales entre les fentes de fléchir autour des angles inférieurs formés par la jonction des parois latérales avec la bride inférieure (30).

# FIG. 1

# FIG. 2

**FIG. 3**

**FIG. 4**

**FIG. 5**

FIG. 6

FIG. 7

FIG. 9

FIG.10

FIG.11

FIG.8

**SOLID NUT USED FOR CRIMPING COLLAR INTO SLOT. TOTAL DEFLECTION IS .0025 LOSS OF .001 FROM BEARING FRETTING WEAR OR NORMAL JOINT RELAXATION DROPS LOAD TO 12,000 LBS.**

**ELEPHANT NUT AUTO-MATIC LOCK TOTAL SPRING DEFLECTION = .052 RELAXATION OR DIMENSIONAL CHANGE WOULD HAVE TO BE .022 OR 22 X THAT OF THE SOLID NUT TO DROP TO 12,000 LBS.**

REPEAT

NOTE: 2000LB PRELOAD

← .010 →

LOAD IN POUNDS

22,000

20,000

18,000

16,000

14,000

12,000

10,000

8,000

6,000

4,000

2,000

1    2    3    4    5    6    7    8    9    10

ELONGATION — COMPRESSION

4

0 060 271